# DEMANDE DE BREVET EUROPEEN

(11) **EP 1 408 363 A1**
(43) Date de publication de la demande: **14.04.2004**
(21) Numéro de dépôt: 02292480.7
(22) Date de dépôt: 08.10.2002
(51) Int. Cl.: G02C 9/02

(54) **Lunettes, notamment pour la peche**

(30) Priorité: 17.10.2001 FR 0113386
(71) Demandeur: Locaplast, 77090 Collegien (FR)
(72) Inventeur: Deveney, Jean-Paul, 77340 Pontault-Combault (FR); Girard, Edouard, 94500 Champigny-sur-Marne (FR)
(74) Mandataire: Breese, Pierre

(57) **Abrégé**

La présente invention se rapporte à des lunettes (1), notamment pour la pêche, du type comportant une monture (2) présentant des branches (3, 3'), lesdites lunettes (1) comportant en outre au moins un écran fumé (4), pour filtrer les rayons du soleil, caractérisées en ce que ladite monture (2) comporte en outre au moins un écran de correction (5) de la vue, ledit ou lesdits écrans de correction (5) étant mobile(s) par rapport à ladite monture (2) entre une position active dans laquelle il(s) permet(tent) une modification de la vision à travers ledit ou lesdits écran(s) fumé(s) (4) et une position inactive, dans laquelle il(s) ne permet(tent) pas une modification de la vision à travers ledit ou lesdits écran(s) fumé(s) (4).

La présente invention se rapporte également à un jeu d'écrans de correction (5) pour des lunettes (1) selon l'invention

## Description

La présente invention se rapporte au domaine de la lunetterie.

La présente invention se rapporte plus particulièrement à des lunettes, notamment pour la pêche, du type comportant une monture présentant des branches, lesdites lunettes comportant en outre au moins un écran fumé, pour filtrer les rayons du soleil.

L'art antérieur connaît déjà des lunettes comportant deux écrans fumés pour filtrer les rayons du soleil, reliés par un pontet destiné à être positionné sur le nez.

Un inconvénient majeur de telles lunettes est que lorsque l'on souhaite associer le filtrage des rayons du soleil avec une correction, lorsque cette correction n'est utile que pendant une courte période.

Le ou les écran (s) fumé (s) peu (ven) t éventuellement être pourvu(s) de moyens de correction de la vue, mais alors, il faut se munir de deux paires de lunettes de soleil :
- une paire que l'on va utiliser lorsque l'on a besoin de la correction et
- une paire que l' on va utiliser lorsque l'on n'a pas besoin de correction.

Ceci est gênant pour des activités sportives telles que la pêche car il y a alors un risque de perdre la paire de lunette que l'on n'utilise pas.

En outre, les manipulations sont malaisées lorsqu'il faut substituer une paire par une autre.

La présente invention entend remédier aux inconvénients de l'art antérieur en proposant des lunettes de soleil comportant des moyens de correction de la vue escamotables d'une manière très simple, afin de permettre d'utiliser facilement ces moyens uniquement lorsque le besoin s'en fait ressentir.

Pour ce faire, la présente invention est du type décrit ci-dessus et elle est remarquable, dans son acception la plus large, en ce que ladite monture comporte en outre au moins un écran de correction de la vue, ledit ou lesdits écrans de correction étant mobile(s) par rapport à ladite monture entre une position active dans laquelle il(s) permet(tent) une modification de la vision à travers ledit ou lesdits écran(s) fumé(s) et une position inactive, dans laquelle il(s) ne permet(tent) pas une modification de la vision à travers ledit ou lesdits écran(s) fumé(s).

Ledit ou lesdits écrans de correction est ou sont de préférence amovibles de ladite monture.

Ladite monture comporte de préférence des moyens de fixation dudit ou desdits écrans de correction formés par au moins une gorge ménagée sur ladite monture ou sur ledit ou lesdits écrans de correction, ladite gorge étant destinée à coopérer avec une tige positionnée respectivement sur ledit ou lesdits écrans de correction ou sur ladite monture.

Lesdits écrans de correction peuvent de préférence être bloqués provisoirement en position active à l'aide de moyens de blocages constitués par une pluralité de plots métalliques positionnés sur ladite monture ou sur ledit ou lesdits écrans de correction, lesdits plots métalliques étant destinés à coopérer chacun avec un aimant positionné respectivement sur ledit ou lesdits écrans de correction ou sur ladite monture.

Lesdits écrans fumés est ou sont chacun de préférence constitué(s) d'un écran anti-reflet polarisé.

Lesdits écrans de correction est ou sont chacun de préférence constitué(s) au moins partiellement d'une loupe.

Lesdits écrans de correction sont de préférence montés sur une monture secondaire.

Lesdits écrans de correction présentent de préférence des caractéristiques de correction différentes de manière à former un jeu de correction couvrant au moins une partie des corrections usuelles.

La présente invention se rapporte également à jeu d'écrans de correction pour des lunettes selon l'invention.

Avantageusement, la présente invention permet de n'utiliser le ou les écrans de correction que lorsque le besoin s'en fait ressentir, tout en conservant une protection contre le soleil.

On comprendra mieux l'invention à l'aide de la description, faite ci-après à titre purement explicatif, d'un mode de réalisation de l'invention, en référence aux figures annexées :
- la figure 1 illustre une vue en perspective des lunettes selon l'invention, les écrans de correction étant abaissés sur les écrans fumés ;
- la figure 2 illustre une vue en perspective des lunettes selon l'invention, les écrans de correction étant relevés ; et
- la figure 3 illustre une vue en perspective partielle du système de coopération entre un écran de correction et la monture principale.

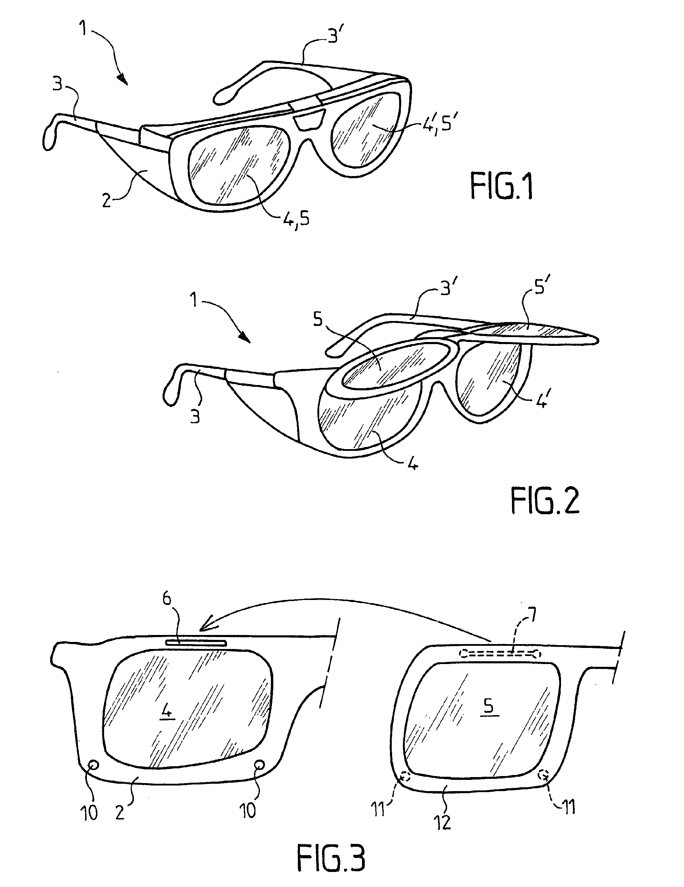

Les lunettes (1) selon l'invention, illustrées figure 1, notamment pour la pêche, sont du type comportant une monture (2) principale présentant des branches (3, 3'), lesdites lunettes (1) comportant en outre au moins un écran fumé (4, 4'), pour filtrer les rayons du soleil.

Les lunettes (1) selon l'invention sont caractérisées en ce que ladite monture (2) comporte en outre au moins un écran de correction (5) de la vue, ledit ou lesdits écrans de correction (5, 5') étant mobile(s) par rapport à ladite monture (2) entre une position active dans laquelle il(s) permet(tent) une modification de la vision à travers ledit ou lesdits écran(s) fumé(s) (4, 4') et une position inactive, dans laquelle il(s) ne permet(tent) pas une modification de la vision à travers ledit ou lesdits écran(s) fumé(s) (4, 4'), comme illustré figure 2.

La correction appliquée par le ou les écrans de correction (5, 5') peut être une correction de la myopie, de l'astigmatisme ou de l'hypermétropie.

Le ou les écrans de correction (5) sont montés mobiles sur la monture (2) et amovibles de la monture (2) grâce à un système formé par au moins une gorge (6) ménagée sur ladite monture (2) ou sur ledit ou lesdits écrans de correction (5, 5'), ladite gorge (6) étant destinée à coopérer avec une tige (7) positionnée respectivement sur ledit ou lesdits écrans de correction (5, 5') ou sur ladite monture (2).

Dans l'exemple illustré figure 3, chaque écran de correction (5, 5') comporte dans sa partie supérieure une tige (7) susceptible d'être introduite et de tourner avec frottement à l'intérieur de la gorge (5) ménagée sur la monture (2).

Lesdits écrans de correction (5, 5') peuvent être bloqués provisoirement en position active à l'aide de moyens de blocages constitués par une pluralité de plots métalliques (10) positionnés sur ladite monture (2) ou sur ledit ou lesdits écrans de correction (5, 5'), lesdits plots métalliques (10) étant destinés à coopérer chacun avec un aimant (11) positionné respectivement sur ledit ou lesdits écrans de correction (5, 5') ou sur ladite monture (2).

Dans l'exemple illustré figure 3, ladite monture (2) comporte dans sa partie inférieure quatre plots métalliques (10) et chaque écran de correction (5, 5') comporte dans sa partie inférieure deux aimants (11).

Le ou les écrans de correction peuvent être sont montés sur une monture secondaire (12) comportant des moyens d'accueil pour chaque écran de correction (5, 5') ainsi qu'un pontet.

Les écrans fumés (4, 4') et de correction (5, 5') peuvent être constitués de verres minéraux ou organiques. Chaque écran est normalement destiné à être positionné au regard d'un oeil, mais il peut être imaginé de réaliser un écran fumé ou de correction qui couvre les deux yeux.

Lesdits écrans fumés (4, 4') peut ou peuvent être chacun constitué(s) d'un écran anti-reflet polarisé.

Lesdits écrans de correction (5, 5') peut ou peuvent être chacun constitué(s) au moins partiellement d'une loupe.

L'invention est décrite dans ce qui précède à titre d'exemple. Il est entendu que l'homme du métier est à même de réaliser différentes variantes de l'invention sans pour autant sortir du cadre du brevet.

## Revendications

1. Lunettes (1), notamment pour la pêche, du type comportant une monture (2) présentant des branches (3, 3'), lesdites lunettes (1) comportant en outre au moins un écran fumé (4, 4'), pour filtrer les rayons du soleil, **caractérisées en ce que** ladite monture (2) comporte en outre au moins un écran de correction (5, 5' ) de la vue, ledit ou lesdits écrans de correction (5, 5') étant mobile(s) par rapport à ladite monture (2) entre une position active dans laquelle il(s) permet(tent) une modification de la vision à travers ledit ou lesdits écran(s) fumé(s) (4, 4') et une position inactive, dans laquelle il(s) ne permet(tent) pas une modification de la vision à travers ledit ou lesdits écran(s) fumé(s) (4, 4').

2. Lunettes (1) selon la revendication 1, **caractérisées en ce que** ledit ou lesdits écrans de correction (5, 5') est ou sont amovibles de ladite monture (2).

3. Lunettes (1) selon la revendication 1 ou la revendication 2, **caractérisées en ce que** ladite monture (2) comporte des moyens de fixation dudit ou desdits écrans de correction (5) formés par au moins une gorge (6) ménagée sur ladite monture (2) ou sur ledit ou lesdits écrans de correction (5, 5'), ladite gorge (6) étant destinée à coopérer avec une tige (7) positionnée respectivement sur ledit ou lesdits écrans de correction (5, 5') ou sur ladite monture (2).

4. Lunettes (1) selon l'une quelconque des revendications 1 à 3, **caractérisées en ce que** lesdits écrans de correction (5, 5') peuvent être bloqués provisoirement en position active à l'aide de moyens de blocages constitués par une pluralité de plots métalliques (10) positionnés sur ladite monture (2) ou sur ledit ou lesdits écrans de correction (5, 5'), lesdits plots métalliques (10) étant destinés à coopérer chacun avec un aimant (11) positionné respectivement sur ledit ou lesdits écrans de correction (5, 5') ou sur ladite monture (2).

5. Lunettes (1) selon l'une quelconque des revendications 1 à 4, **caractérisées en ce que** lesdits écrans fumés (4, 4' ) est ou sont chacun constitué (s) d'un écran anti-reflet polarisé.

6. Lunettes (1) selon l'une quelconque des revendications 1 à 5, **caractérisées en ce que** lesdits écrans de correction (5, 5') est ou sont chacun constitué(s) au moins partiellement d'une loupe.

7. Lunettes (1) selon l'une quelconque des revendications 1 à 6, **caractérisées en ce que** lesdits écrans de correction (5, 5') sont montés sur une monture secondaire (12).

8. Lunettes (1) selon l'une quelconque des revendications 1 à 7, **caractérisées en ce que** lesdits écrans de correction (5, 5') présentent des caractéristiques de correction différentes de manière à former un jeu de correction couvrant au moins une partie des corrections usuelles.

9. Jeu d'écrans de correction (5, 5') pour des lunettes (1) selon la revendication 8.
